# EUROPEAN PATENT APPLICATION

(11) **EP 1 282 032 A2**
(43) Date of publication of application: **05.02.2003**
(21) Application number: 02077965.8
(22) Date of filing: 19.07.2002
(51) Int. Cl.: G06F 3/033

(54) **User interface including portable display for use with multiple electronic devices**

(30) Priority: 31.07.2001 US 919244
(71) Applicant: EASTMAN KODAK COMPANY, Rochester, New York 14650 (US)
(72) Inventor: Polgar, Leslie G., c/o Eastman Kodak Company, Rochester, New York 14650-2201 (US); Cok, Ronald S., c/o Eastman Kodak Company, Rochester, New York 14650-2201 (US)
(74) Representative: Parent, Yves

(57) **Abstract**

A user interface for use with a plurality of electronic devices, each having a representative icon and display layout and content, includes; a display screen; a touch screen overlaying the display screen; a wireless communication interface for communicating with the electronic devices; and a controller connected to the communication interface, the touch screen and the display screen, the controller including means for, receiving and displaying the icons representing the electronic devices on the display screen, sending a communication to a selected electronic device in response to selection of one of the icons via the touch screen, receiving and displaying the screen layout and content of the selected electronic device, and communicating user inputs from the touch screen to the selected electronic device.

## Description

The present invention relates to user interface devices for multiprocessor computing systems and particularly to a mobile user interface that includes a display and a touch screen.

Mobile electronic devices are widely used today to meet a variety of needs. For example, cell phones, personal digital assistants (PDAs), notebook computers, pagers and the like are all portable electronic devices in common usage. Portable entertainment and image capture or playback devices such as televisions or video players, audio compact disc players, cameras, and the like are ubiquitous. Typically, all of these devices utilize a display interface of some sort to communicate information to the user and receive user inputs. These displays, especially large, multi-color displays, represent a significant fraction of the cost of the portable devices.

Some displays are commonly very small (usually less than 6.25 cm in diagonal) and have minimal requirements. For example, pagers typically utilize a one- or two-line reflective LCD display with very low power requirements. Other displays are larger with higher resolution. For example, cell-phones have larger, multi-line displays capable of displaying small icons or images. Some cell phones today include a color display. Personal digital assistants (PDAs) utilize small displays and have a sophisticated user interface that requires a very flexible display capable of displaying a wide variety of information. Portable displays available today are often black and white but more expensive devices include full-color displays. For example, digital cameras require image-capable, low-resolution, full-color display devices. Power usage is a significant concern for portable devices having displays. The highest resolution color displays are often used for computer monitors. These computer monitors must be relatively large, colorful, and bright, as well as capable of displaying any kind of information, including text, icons, and images. Typically, computer monitors are pixel addressable with high resolution.

Some display devices incorporate user interaction mechanisms into the display, for example touch screens as found on PDAs, on some types of tablet computers, and on interactive kiosk displays. Other user interfaces rely on separate keypads or keyboards that are independent of the display as found on notebook computers.

Regardless of the functionality of the various devices, they all utilize displays. Because each device has a separate display, the cost to the user of multiple devices is higher than it could be and the functionality of the displays for some devices is much more constrained than might be desired. Moreover, in a multi-device environment it is necessary for users to switch from one device display to another to utilize the devices.

Networks of computing devices each utilizing a display associated with each computing device have been available for many years. These networks enable one computer to execute programs on another computer and to display the results on the local computer as is commonly done, for example, with the Unix operating system. Other software tools allow a computer to mirror its display onto another computer on the network. Simple display devices such as monitors and televisions are also readily available and in wide use. However, these devices do not enable information display to a central location from a variety of devices with a variety of display needs, nor do they integrate user feedback and support transfer of the user feedback information to a specific device.

The Airspeak company of Morgan Hill California has introduced a wireless mobile pad called "Flair" that is capable of displaying an entire PC desktop at locations remote from the PC. The wireless mobile pad has the drawback that it provides an interface to only one device.

It is also known to provide a programmable remote control device for interacting with a plurality of remotely controlled devices, see for example US Patent 5,410,326 issued April 25, 1995 to Goldstein shows a control device having a display with a touch screen, an infrared communication link, an RF communication link, and a programmable controller. The Goldstein control device has the disadvantage that it is programmed from a central television programming facility that is accessed through a converter by the RF communication link, thereby restricting its use to a system that includes a central programming facility that includes programming instructions for every electronic device in the system.

There is a need therefore for an improved display system for multiple devices which reduces the cost of the system, optimizes the functionality of each device in the system, enhances the convenience of the device, and enables feedback to each device from a central interaction point.

The need is met by providing a user interface for use with a plurality of electronic devices, each having a representative icon and display layout and content, that includes; a display screen; a touch screen overlaying the display screen; a wireless communication interface for communicating with the electronic devices; and a controller connected to the communication interface, the touch screen and the display screen, the controller including means for, receiving and displaying the icons representing the electronic devices on the display screen, sending a communication to a selected electronic device in response to selection of one of the icons via the touch screen, receiving and displaying the screen layout and content of the selected electronic device, and communicating user inputs from the touch screen to the selected electronic device..

The present invention has the advantage that it reduces the costs or a system of mobile electronic devices, increases the functionality of a system of electronic devices, and integrates the user's interaction into a single device.
Fig. 1 is an illustration of the user interface device according to the present invention;
Fig. 2 is an illustration of the user interface device together with a plurality of communicating electronic devices according to the present invention;
Fig. 3 is an illustration of the user interface device displaying icons associated with the electronic devices;
Fig. 4 is an illustration of the user interface device displaying information layout and content;
Fig. 5 is an illustration of the user interface device displaying both icons associated with each electronic device and information layout and content associated with one of the devices; and
Fig. 6 is an illustration of an electronic device useful with the user interface device of the present invention.

Systems of electronic devices that each have a user interface can overcome the cost, inconvenience, and inefficiency of supporting a separate user interface for each device by using a single, common user interface that includes a display and data input mechanism for all of the devices. The user interface according to the present invention includes a display, a touch screen, a controller and a communications interface capable of interacting with the most complex or demanding device in the system. The user interface controller requires only the computational power necessary to establish and maintain communications with the devices in the system and to receive and transmit the necessary signals to display information on the display and to transmit the user interaction information to the devices.

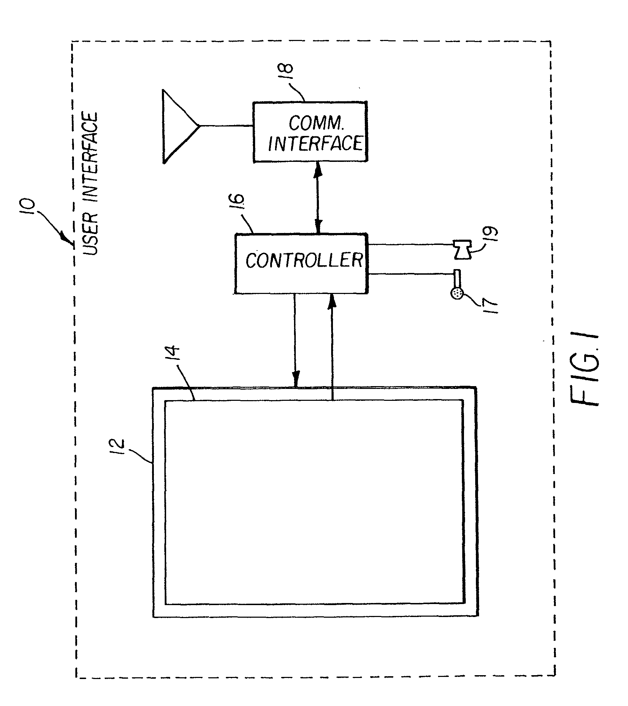

Fig. 1 illustrates a user interface according to the present invention. The user interface **10** includes a display **12** with a touch screen **14** over the display **12.** A controller **16** displays information upon the display screen **12** and receives interactive signals from the touch screen **14.** The controller **16** is also connected to a wireless communications interface **18** and may include a microphone **17** or speaker **19.** Alternatively, the controller **16** may provide an interface to an external microphone and speaker, for example to a standard audio headset with a conventional connection plug as is well known in the art.

The display **12** and touch screen **14** can be integrated on a common substrate as disclosed in copending US Serial No. 09/826,194 filed April 4, 2001 by Siwinski et al., which is incorporated herein by reference. In a preferred embodiment, the display is a bottom emitting OLED display and the touch screen is a resistive wire touch screen. The controller **16,** may also include means (not shown) for controlling the display **12** and the touchscreen **14** and may be integrated in a single integrated circuit.

The controller **16** may be integrated on a common substrate with the display and the touchscreen as shown US Serial No. 09/855,452 filed May 15, 2001 by Feldman, which is hereby incorporated by reference. Similarly, the display, touchscreen, communication interface and controller may all be integrated on a common substrate.

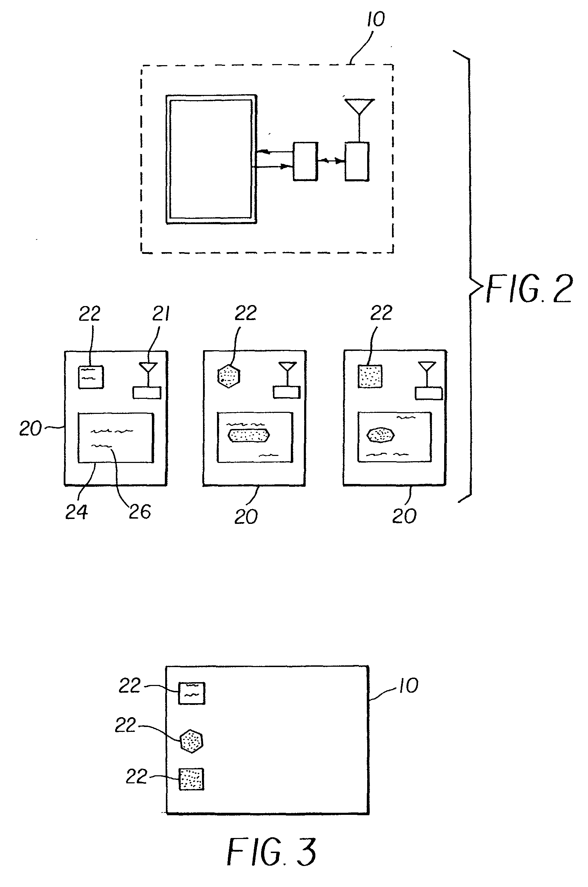

Fig. 2 shows the user interface **10** associated with a plurality of electronic devices **20**. Each device **20** includes a complementary communications interface **16** and a representative icon **22** together with a screen layout **24** suitable to the user interaction requirements of the device's function. The screen layout **24** includes information content **26** (for example, words, graphics, and pictures, softbuttons, etc.) for communicating status, requesting information, etc. from the user. Although the icon, screen layout and information content are shown graphically in Fig. 2, it is to be understood that they are implemented as digital information controlled by software in digital circuitry in the device **20.**

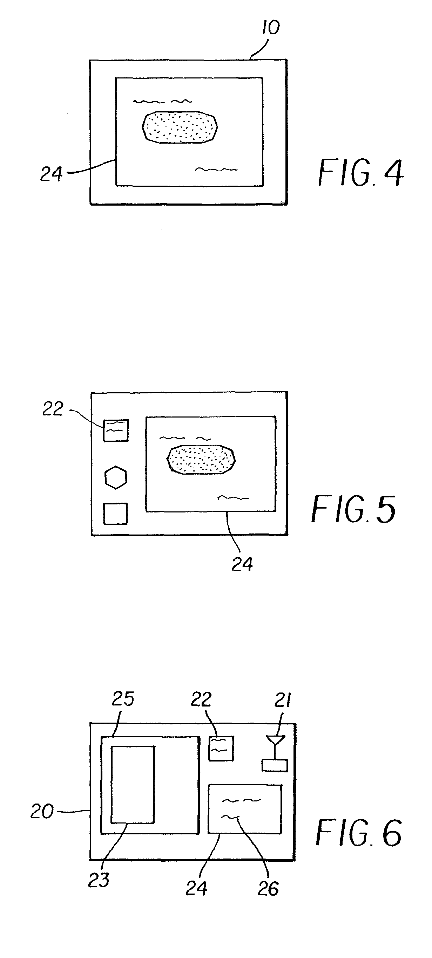

When the user interface **10** is operational, it will receive communications from one or more electronic devices **20** through its communications interface. Suitable interfaces are known in the art, for example, infrared and electromagnetic (radio) interfaces and standards are commercially available. The controller **16** interacts with the devices, receives an icon **22** from each of them and presents the icons **22** to the user as an indication of the device's availability (as shown in Fig. 3). Upon receiving a selection from the user, the controller communicates appropriately with the chosen device **20** to perform the task selected. Typically, this will require that the chosen device transmit a display screen **24** with the appropriate user options necessary to operate the device (Fig. 4). The user then interacts with the user interface **10,** which displays the screen **24** for operating the device **20.** The screen **24** is updated with additional content information communicating status, new choices, etc., as is well known with any digital device interface as the device **20** is operated by the user. Alternatively, the electronic device **20** may download additional screens **24** to the user interface **10** as necessary to interact with the user. When operation is complete, the user interface **10** can revert to the original screen showing the icons of the available devices. For example by responding to a user selection or a completion signal from the device **20.**

Referring to Fig. 5, in another implementation, the user interface **10** can maintain a screen showing both icons **22** for the available devices and the control interface **24** for a selected device. This allows an operator to switch between operating several devices simultaneously by selecting the device to be interacted with from the available device icons **22.**

The electronic devices **20** can also communicate with each other to establish availability, task priority, and access to shared resources, such as the user interface device **10.** In this embodiment, additional software and communications capability for performing the inter-device communication and control tasks is integrated into the devices **20**. Devices **20** can, for example, alert the user to new information via the user interface **10** rather than awaiting a user interaction. Devices **20** can also share the interface in more sophisticated ways, through screen partition, for example. A wide variety of interfaces and interaction modes can be supported from the user interface of the present invention. This variety of user interactions supports an equally wide variety of communicating devices. For example, digital cameras, PDAs, cell phones, pagers, audio and video CD players, and portable televisions can all be controlled by the user interface **10.** The chief limitation for any given implementation is that bandwidth of the wireless communications interface **18.** A secondary limitation is the additional interaction capabilities integrated into the user interface **10.** For example, the user interface **10** can include various signaling mechanisms such as flashing lights, switches, vibrators, a microphone, and a speaker.

The display device **10** as illustrated in Figs. 1 and 2 can be constructed with an LCD or OLED display, together with conventional touch screens, display and touch screen controllers, and communications devices. These individual components are commercially available as are various electronic devices. In a conventional implementation, the communications controller will enable a communications network supporting conventional software and protocol stacks as well as the hardware support for wired or wireless operation within the user interface and the electronic devices. These communications networks are well established in the prior art such as, for example, Ethernet, TCP/IP protocols, 802.1 lb or Bluetooth wireless standards.

Referring to Fig. 6, the electronic devices **20** perform the basic functions of a particular device (e.g. cell phone, DVD player, PDA, pager, etc.). This functionality is represented by block **23** and is conventional, and implemented in any commercial device suitable for the system of the present invention. In addition, each device **20** supports a communication management utility **25** responsible for organizing communications to the user interface. This layer can be implemented in either hardware or software. The communication network interface **21** supports the capability for devices **20** to appear and disappear from the network as devices **20** become available or unavailable.

All of the devices **20** in the system utilize a common interface and network protocol and a common display management utility. The display management utility can be custom programmed for the system or, preferably, can use existing, open source tools such as X Windows or virtual interface display tools such as the Virtual Network Computing (VNC) software available from AT&T Laboratories, Cambridge England.

In the case for which devices **20** inter-communicate to establish rights to use or share the user interface **10,** an additional layer of inter-device collaboration must be enabled and can be integrated within the display management utility. Referring to Fig.6, an additional software layer (not shown) within the utility **25** establishes communication between devices **20** as necessary. The additional software layer may be provided, for example by the device intercommunication and control software package JINI from Sun Microsystems, Universal Plug and Play from Microsoft, or remote procedure calls (RPCs) as implemented in many multi-threaded operating systems. These tools manage interactions between devices and also handle the situation in which one or more devices appear or disappear from a network.

The complete system, as illustrated in Fig. 2, operates as follows. The devices **20** are powered by operating a power switch (not shown). Upon power up, the devices **20** periodically transmit the icon information to any user interface **10** that may be in the vicinity. Upon receiving the icon information, the icon is displayed on the user interface **10** and the user can interact with the device **20** by selecting the icon. The device **20** functions as intended and, when information is to be displayed to the user, the display information is formatted and rendered using the screen layouts programmed into the electronic device. The rendered display information is transmitted to the user interface **10** and is then received and displayed. The user observes the display and takes the appropriate action. When the device has completed its task, it ceases sending display information to the display.

Alternatively, a device **20** may be in a sleep mode in which it is receptive to a waking signal from the user interface and upon receipt of the signal, transmits the icon information to the user interface **10.** In a system where the multiple devices **20** have the capability for intercommunication, when a device **20** is powered up, it periodically broadcasts a signal to any other devices **20** in the vicinity, or in a sleep mode is receptive to signals from other devices, which wake it. The available devices intercommunicate to establish rights to communicate with the user interface **10** and a device that has the right to communicate with the user interface transmits its icon to the user interface. The devices may communicate to generate a syncretic display, thereby obviating the need to transmit individual icons.

In this embodiment, a device **20** first communicates with any other devices **20** and establishes the right to use the user interface **10.** Once this negotiation is complete and rights are granted by the community of devices **20,** a device **20** transmits the rendered display information to the user interface **10.** In this case, it is useful for the display information to include information about which device **20** is communicating so as to aid the user in interacting with the appropriate device **20.** Note that in this case, the user need not be the causative agent for an interaction. This mode of operation is particularly useful for cell phones and pagers.

In a more sophisticated implementation, if more than one device **20** needs to communicate with the user interface **10,** the interface can be shared. In this case, the inter-device communication software supports the integration of a single rendered display information screen from two (or more) sources. This can be accomplished by making one device **20** the controlling device and the other the controlled device and allocating space within the display information for the controlled information while reserving the remainder of the space for the controlling device. Alternatively, the controlled device may request an interrupt or other notification to the user using, for example, a pop-up screen, as is well known in the art. Software tools for establishing controlling or controlled status within a device are well known and available in, for example, Universal Plug and Play software from Microsoft.

It is also possible for a device **20** to initiate communication by attempting to signal the user interface **10.** This can be done, for example, by flashing the screen intermittently or by displaying particular colors or icons. The user interface **10** can be further enhanced with the use of special lights, buzzers, vibrators, or the like to enable different modes of communication with different physical attributes.

As described in the present invention, a local wireless user interface enables a more convenient mode of operation for a wide variety of devices. For example, users can store their devices in a briefcase or other portable storage container. The devices can share a common power supply. The user interface can be carried on the user's person and serve as a single interface to all of the devices without requiring a physical interaction with the device, thus giving the user greater freedom of movement with fewer devices to carry. The present invention is also useful for interacting with devices in a fixed location, in this case, the user interface **10** is carried into the vicinity of the fixed device and serves as a local user interface. For example, the user interface can be carried into a room with a large computer and can function as the user interface to the large computer.

To enable adoption of the user interface by a wide community of devices, the use of industry standards, both for the physical hardware interfaces and for the software tools, is helpful. With the use of industry standards, manufacturers are more likely to support the use of the user interface. It is also helpful to utilize a secure communications or data encoding mechanism, such as the Data Encryption Standard (DES) to prevent unauthorized access to the devices' operations and communications. A local user interaction device and the communicating devices associated with it can also access or otherwise communicate with other sets of devices or with conventional electronic devices, communication links, computers, etc. that are provided with appropriate communication interfaces and security tools. This can allow, for example, a user to browse the Internet from his or her user interaction device through a suitably equipped access point.

In a preferred embodiment, the display **12** of the user interface **10** of the present invention is an Organic Light Emitting Diode (OLED) display which is composed of small molecule polymeric OLEDs as disclosed in but not limited to US Patent 4,769,292, issued September 6, 1988 to Tang et al. and US Patent 5,061,569, issued October 29, 1991 to VanSlyke et al. Many combinations and variations of organic light emitting displays can be used to fabricate such a device. Such an OLED display device is small, low-power, pixel-addressable, color, and capable of fitting within a shirt pocket, brief-case pocket, or even a wallet or purse, and is very portable. Interaction with the display device can be implemented with a standard touch screen technology, preferably one such as resistive wire technology commonly used in PDA devices.

According to an alternative embodiment of the invention, the user interface is connected to the electronic devices by wired connection. According to a further embodiment of the invention, the user interface does not include a touch screen. In this embodiment either a separate input device such as a portable keyboard that is arranged to communicate with some or all of the electronic devices or an input device on each electronic device is provided.

## Claims

1. A user interface for use with a plurality of electronic devices, each having a representative icon and display layout and content, comprising;
a) a display screen;
b) a touch screen overlaying the display screen;
c) a wireless communication interface for communicating with the electronic devices; and
d) a controller connected to the communication interface, the touch screen and the display screen, the controller including means for,
i) receiving and displaying the icons representing the electronic devices on the display screen,
ii) sending a communication to a selected electronic device in response to selection of one of the icons via the touch screen,
iii) receiving and displaying the screen layout and content of the selected electronic device, and
iv) communicating user inputs from the touch screen to the selected electronic device.

2. The user interface claimed in claim 1, wherein the icons are displayed on one area of the display screen and the screen layout and content is displayed on an adjacent area of the display screen.

3. The user interface claimed in claim 1, wherein the communication's interface is an infrared interface.

4. The user interface claimed in claim 1, wherein the communication interface is an RF interface.

5. The user interface claimed in claim 1, wherein the display is an organic light emitting diode display.

6. The user interface claimed in claim 1, further comprising a microphone and speaker connected to the controller.

7. The user interface claimed in claim 1, wherein the controller further comprises means for changing the display layout and content in response to communications from the selected electronic device.

8. The user interface claimed in claim 1, wherein the display layout includes softbuttons.

9. The user interface claimed in claim 1, wherein the screen layout and content are defined as an array of pixels.

10. The user interface claimed in claim 1, wherein the screen layout and content are defined as graphical objects and the controller includes means for rendering the graphical objects for display.

11. The user interface claimed in claim 1, further comprising one or more additional operator interface modalities selected from the group consisting of a switch button, a light, a speaker, and a vibrator.

12. The user interface claimed in claim 1, wherein the display and the touchscreen are integrated on a common substrate.

13. The system claimed in claim 12, wherein the display is an OLED display and the touchscreen is a resistive wire touchscreen.

14. The system claimed in claim 1, wherein the controller, further comprises means for controlling the display and the touchscreen.

15. The system claimed in claim 14, wherein the controller is integrated in a single integrated circuit.

16. The system claimed in claim 1, wherein the controller is integrated on a common substrate with the display and the touchscreen.

17. The system claimed in claim 1, wherein the display, touchscreen, communication interface and controller are integrated on a common substrate.
